(19) **Europäisches Patentamt / European Patent Office / Office européen des brevets**

(11) **EP 1 542 217 B1**

(12) **EUROPEAN PATENT SPECIFICATION**

(45) Date of publication and mention
of the grant of the patent:
**05.05.2010 Bulletin 2010/18**

(21) Application number: **03797622.2**

(22) Date of filing: **17.09.2003**

(51) Int Cl.:
$G11B\ 7/24$ (2006.01)     $G11B\ 7/26$ (2006.01)

(86) International application number:
**PCT/JP2003/011809**

(87) International publication number:
**WO 2004/027770 (01.04.2004 Gazette 2004/14)**

(54) **OPTICAL INFORMATION RECORDING MEDIUM AND PRODUCTION METHOD THEREFOR**

OPTISCHES INFORMATIONSAUFZEICHNUNGSMEDIUM UND HERSTELLUNGSVERFAHREN DAFÜR

SUPPORT D'ENREGISTREMENT OPTIQUES D'INFORMATIONS ET PROCEDE DE FABRICATION

(84) Designated Contracting States:
**DE FR GB**

(30) Priority: **18.09.2002 JP 2002271122**

(43) Date of publication of application:
**15.06.2005 Bulletin 2005/24**

(73) Proprietor: **Panasonic Corporation**
**Kadoma-shi**
**Osaka 571-8501 (JP)**

(72) Inventors:
• **UNO, Mayumi**
**Ibaraki-shi, Osaka 567-0868 (JP)**
• **NISHIUCHI, Kenichi**
**Hirakata-shi, Osaka 573-1135 (JP)**
• **KOJIMA, Rie**
**Kadoma-shi, Osaka 571-0030 (JP)**
• **YAMADA, Noboru**
**Hirakata-shi, Osaka 573-1104 (JP)**

(74) Representative: **Jeffrey, Philip Michael**
**Dehns**
**St Bride's House**
**10 Salisbury Square**
**London**
**EC4Y 8JD (GB)**

(56) References cited:
**EP-A- 1 172 811**     **EP-A- 1 180 767**
**EP-A- 1 229 528**     **JP-A- 2000 235 733**
**JP-A- 2002 133 712**     **JP-A- 2002 230 828**
**JP-A- 2002 251 778**

• **RIE KOJIMA AND NOBORU YAMADA: "Acceleration of Crystallization speed by Sn addition to Ge-Sb-Te phase-change recording material" JAPANESE JOURNAL OF APPLIED PHYSICS, vol. 40, no. 4B, 10 October 2001 (2001-10-10), pages 5930-5937, XP002467958**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## EP 1 542 217 B1

**Description**

Technical Field

The present invention reiates to an optical information recording medium on/from which information can be recorded/reproduced with a high density at a high speed using optical means such as irradiation with a laser beam, and a method for manufacturing the same.

Background Art

Optical information recording media such as magneto-optical recording media and phase-change recording media are known as information recording media having a high capacity on/from which information can be recorded/ reproduced at a high speed. These optical information recording media utilize the difference in the optical characteristics of a recording material generated by irradiating the recording material locally with a laser beam as a record. These optical information recording media are very advantageous in that they can be accessed randomly, if necessary, and also have excellent portability, so that the importance thereof has been increasingly growing in recent years. The demand for them is increasing in various fields including a medical field, an academic field, etc. and for various purposes including, for example, recording and storing personal data or image information with computers and substituting for home video tapes. Presently, with higher performance of applications and higher quality of image information, it is required to increase the capacity, density, and speed of these optical information recording media even more.

As one means for achieving a higher density, optical information recording media having a plurality of information layers have been proposed, and for example, a technique of laminating two information layers formed by using a write-once material has been proposed (e.g., see International Publication No. 98/09823). Similarly, EP 1180767 discloses an optical information recording medium having a plurality of information layers formed using a write-once material. EP 1172811, meanwhile discloses an optical information recording medium having a plurality of information layers formed using a rewritable (phase-change) material.

However, when such an optical information recording medium including two or more information layers is to be realized, recording/reproduction of information on/from an information layer located farther when viewed from a laser beam incidence side (arranged away from a plane to which a laser beam is incident) may be affected by an information layer located nearer (the laser beam incidence side). That is, in the case where the transmittance of the information layer on the near side changes according to whether or not recording has been performed, when information is recorded/ reproduced on/from the information layer located on the far side using a laser beam having passed through the information layer on the near side, it is difficult to record/reproduce signals correctly because the quantity of a laser beam that reaches the information layer on the far side differs according to whether or not recording has been performed in a portion of the information layer through which the laser beam has passed. This disadvantage becomes critical as the number of information layers to be laminated increases. In particular, some write-once optical information recording media can be designed such that one information layer has a very high transmittance of, for example, 70% or more, and it is preferable to laminate a plurality of information layers into a multilayer structure, but it is difficult to realize the multilayer structure in practical use when the difference in the transmittance according to whether or not recording has been performed as described above is generated.

To cope with the disadvantage as described above, for example, an optical information recording medium has been proposed in which the difference in the transmittance of an information layer between a portion where recording has been performed and a portion where recording has not been performed located on the near side is reduced and also the information layer on the near side is designed so as to have a high transmittance, so that recording/reproduction on/from an information layer on the far side can be performed correctly, regardless of whether or not recording has been performed in the information layer on the near side. In such an optical information recording medium, a method of adjusting the film thickness of a protective layer included in the information layer is used as a means for designing the information layer in which the difference in the transmittance between the portion where recording has been performed and the portion where recording has not been performed is reduced.

However, with some recording materials, the difference in the transmittance of the information layer between the portion where recording has been performed and the portion where recording has not been performed cannot be reduced only by adjusting the film thickness of the protective layer included in the information layer, and it is impossible to utilize the technique as described above when using such recording materials.

Disclosure of Invention

According to a first aspect of the present invention, there is provided an optical information recording medium as claimed in claim 1.

2

According to a second aspect of the present invention, there is provided a method for manufacturing an optical information recording medium as claimed in claim 8.

Brief Description of Drawings

FIG. 1 is a cross-sectional view showing an example of an optical information recording medium of the present invention.
FIG. 2 is a cross-sectional view showing another example of the optical information recording medium of the present invention.
FIG. 3 is a schematic view showing an example of an information recording/reproducing apparatus that is used when information is recorded/reproduced on/from the optical information recording medium of the present invention.
FIG. 4 is a diagram showing a reproduction signal when reproduction from a second information layer is performed through a first information layer in an example of the present invention.

Best Mode for Carrying Out the Invention

In an optical information recording medium of the present invention, the recording layer provided in the farthest position of the recording layers that change irreversibly between a state A and a state B that are optically different from each other has a complex index of refraction that is different from that of at least one recording layer in a nearer position, and a difference in the transmittance in an information layer is reduced, so that signals can be recorded/reproduced correctly on/from the optical information recording medium in which at least two information layers include a write-once recording layer. The write-once recording layers tend to be designed so as to have a very high transmittance and often can be laminated into a multilayer. Thus, the optical information recording medium of the present invention is suitable to be used for optical information recording media including a write-once recording layer with which a multilayer structure can be realized.

In the optical information recording medium of the present invention, when a difference in the refractive index between the case where the m-th recording layer is in the state A and the case where it is in the state B is Anm, a difference in the extinction coefficient therebetween is $\Delta km$, a difference in the refractive index between the case where the j-th recording layer is in the state A and the case where it is in the state B is $\Delta nj$, and a difference in the extinction coefficient therebetween is $\Delta kj$, it is preferable that the following relationship is satisfied in at least one information layer of the first through (m - 1)th information layers.

$$|\Delta nm| + |\Delta km| > |\Delta nj| + |\Delta kj|$$

Thus, the difference in the transmittance in the information layers can be reduced easily.

In the optical information recording medium of the present invention, it is preferable that the following relationship further is satisfied in the j-th information layer.

$$(TAj + TBj) / 2 \geq 50$$

The reason for this is that signals also can be recorded/reproduced more correctly on/from the information layer arranged away from the laser beam incidence side.

In the optical information recording medium of the present invention, all of the first through m-th recording layers are of a write-once type containing Te-O-M (where M is a material containing at least one element selected from the group consisting of metal elements, semimetal elements and semiconductor elements). Thus, an optical information recording medium capable of providing both a high signal amplitude and a high transmittance can be realized. Moreover, a recording layer provided nearer to the laser beam incidence side has a lower concentration of oxygen atoms. Thus, in addition to that the difference in the transmittance of the information layer located on the near side between the recorded state and the unrecorded state can be reduced easily, the transmittance of the information layer on the near side can be set to a high level easily.

In the optical information recording medium of the present invention, the concentration of M atoms in the first recording layer may be higher than that in the second through m-th recording layers. Thus, in addition to the difference in the transmittance of the information layer located on the near side between the recorded state and the unrecorded state being reduced easily, the transmittance of the information layer on the near side can be set to a high level easily.

In the optical information recording medium of the present invention, it is preferable that m is 4 or more, since a recording medium with a high capacity can be realized.

In the optical information recording medium of the present invention, it is preferable that the first through m-th recording layers have a thickness of 80 nm or less. The reason for this is that an information layer with an even higher transmittance can be realized easily and further the thermal effect on adjacent marks can be suppressed.

The optical information recording medium of the present invention may further include a recording layer that can change reversibly between a state A and a state B that are optically different from each other. According to this, an optical information recording medium applicable to various types of applications can be realized.

Furthermore, according to a method for manufacturing an optical information recording medium of the present invention, the optical information recording medium of the present invention can be produced. For example, in at least one step of the m steps, a write-once recording layer containing Te-O-M can be produced by reactive sputtering, using a target containing at least Te and M (M is a material containing at least one element selected from the group consisting of metal elements, semimetal elements, and semiconductor elements) and a film-forming gas containing at least oxygen gas.

Hereinafter, an embodiment of the present invention will be described more specifically with reference to the drawings.

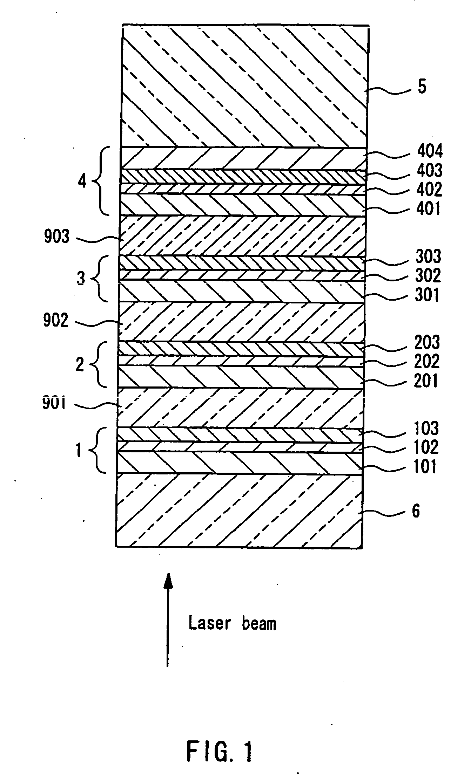

FIG. 1 shows an example of an optical information recording medium in which a first information layer 1, a second information layer 2, a third information layer 3, and a fourth information layer 4 are laminated in this order from the laser beam incidence side via intermediate layers 901, 902, and 903 between a substrate 5 and a light transparent layer 6. In this embodiment, the substrate 5 is arranged on the side opposite to the laser beam incidence side and the light transparent layer 6 is arranged on the laser beam incidence side. It is necessary that an information layer provided in a position nearer to the laser beam incidence side has optical transparency, since this layer has to transmit a laser beam so that the laser beam reaches an information layer provided in a farther position Therefore, in the optical information recording medium in this embodiment, the first through third information layers 1 through 3 have optical transparency. Moreover, it is preferable that the fourth information layer 4 has a high recording sensitivity, since information is recorded/ reproduced with light having passed through the first through third information layers 1 through 3.

The first information layer 1 includes a protective layer 101, a first recording layer 102, and a protective layer 103 that are arranged in this order from the laser beam incidence side. The second information layer 2 includes a protective layer 201, a second recording layer 202, and a protective layer 203 that are arranged in this order from the laser beam incidence side. The third information layer 3 includes a protective layer 301, a third recording layer 302, and a protective layer 303 that are arranged in this order from the laser beam incidence side. The fourth information layer 4 includes a protective layer 401, a fourth recording layer 402, a protective layer 403, and a reflective layer 404 that are arranged in this order from the laser beam incidence side.

The substrate 5 and the light transparent layer 6 are protecting members that serve to protect the optical information recording medium from damage and oxidation. The light transparent layer 6 is formed by using a material that is transparent to the laser beam or a material in which optical absorption, if any, is so small that it may be negligible (e.g., a material with an optical absorptivity of 10% or less), since this layer has to transmit the laser beams so that they reach the first through fourth information layers 1 through 4. In this embodiment, the laser beam is incident from the light transparent layer 6 side, but the laser beam may be incident from the substrate 5 side. In this case, it also is necessary to use a material that is transparent to the laser beam for the substrate 5.

Examples of materials of the substrate 5 and the light transparent layer 6 include various types of resins such as polycarbonate, polymethyl methacrylate, and polyolefin-based resins or glass.

It is sufficient that the light transparent layer 6 can be produced such that it has a uniform film thickness within a predetermined film thickness range. For example, a substrate that is produced into a predetermined shape by molding or the like, a sheet that is made into a predetermined shape, or an ultraviolet curable resin that is transparent to a laser beam used for recording/reproduction can be used. The light transparent layer 6 as used herein refers to all the transparent layers provided on the laser beam incidence side when viewed from the protective layer 101 that will be described later. For example, when transparent sheets are attached by a transparent ultraviolet curable resin, these as a whole should be referred to as the light transparent layer 6.

It is preferable that at least one of the light transparent layer 6 and the substrate 5 is provided with guide grooves or pits for guiding the laser beam formed on the surface that is in contact with an information layer.

The protective layers 101, 103, 201, 203, 301, 303, 401, and 403 are provided for the purpose, mainly, of protecting the first through fourth recording layers 102, 202, 302, and 402 and adjusting the optical characteristics such as allowing effective optical absorption in these recording layers. As materials of the protective layers 101, 103, 201, 203, 301, 303, 401, and 403, materials with which the above-described objectives can be achieved, for example, sulfides such as ZnS, selenides such as ZnSe, oxides such as Si-O, Al-O, Ti-O, Ta-O, Zr-O and Cr-O, nitrides such as Ge-N, Cr-N, Si-N, Al-N, Nb-N, Mo-N, Ti-N, Zr-N and Ta-N, oxynitrides such as Ge-O-N, Cr-O-N, Si-O-N, Al-O-N, Nb-O-N, Mo-O-N, Ti-O-N, Zr-O-N and Ta-O-N, carbides such as Ge-C, Cr-C, Si-C, Al-C, Ti-C, Zr-C and Ta-C, fluorides such as Si-F, Al-F, Ca-F and La-F, and other dielectrics, or appropriate combinations of these substances (e.g., ZnS-SiO$_2$) can be used.

The reflective layer 404 can be formed of a metal such as Au, Ag, Cu, Al, Ni, Cr or Ti, or an alloy of metals appropriately selected from these metals. The reflective layer 404 is provided for the purpose of achieving heat dissipation effect and optical effects such as effective optical absorption in the recording layer 402. The film thickness thereof preferably is 1 nm or more. The reason for this is that when the film thickness of the reflective layer 404 is set to 1 nm or more, the film can be provided in the form of a uniform layer, and heat dissipation effect and optical effects can be increased. In this embodiment, only the fourth information layer 4 is provided with the reflective layer 404, but any of or all of the first through third information layers 1 through 3 may be provided with a reflective layer, or the fourth information layer 4 may not be provided with the reflective layer 404. Generally, when provided with a reflective layer, an information layer decreases its transmittance, but a high signal quality can be achieved easily because of the above-described heat dissipation effect and optical effects. Therefore, it is required to determine as appropriate whether or not a reflective layer is to be provided when designing the first through third information layers 1 through 3 located on the laser beam incidence side. When a reflective layer is provided, it should be designed so that the transmittance of the information layers is kept high by setting the thickness of each reflective layer at a very small film thickness of, for example, 10 nm or less.

The intermediate layers 901, 902, and 903 are layers provided for the purpose of optically separating the first information layer 1 through the fourth information layer 4 and made of a material that is transparent to the laser beam. Specifically, ultraviolet curable resins and the like can be used. The film thickness of each of the intermediate layers 901 through 903 can be set at a film thickness with which the first through fourth information layers can be separated from each other and also the four information layers are present within a range in which an objective lens can focus light thereon. When three or more information layers are laminated, it is preferable that each intermediate layer has a different thickness. The reason for this is as follows. When each intermediate layer has the same thickness, information layers are located equidistantly, so that when recording/reproduction is performed in an information layer in the farthest position when viewed from the laser beam incidence side, the laser beam may be focused on an information layer in a nearer position and thus crosstalk may occur.

The first through fourth recording layers 102, 202, 302, and 402 are formed of a material that can be in two or more states (state A and state B) in which optical characteristics are different. In this embodiment, a write-once recording material (material in which writing can be performed only once) that can change irreversibly between the different states A and B is used for at least two or more layers of these recording layers. It is also possible to use a write-once material for all of these recording layers. When a write-once material is used for two or three layers of the four recording layers, a rewritable material can be used for the other recording layers. In this case, information that is not desired to be erased and information that is desired to be rewritten can coexist in one optical information recording medium, so that an optical information recording medium that is very useful and applicable to various types of applications can be provided. At this time, it is preferable to use a write-once material for a recording layer provided in a position near the laser beam incidence side. The reason for this is that when an oxide-based write-once recording material is used for a recording layer, a high transmittance can be realized easily, so that it becomes easy to design an optical information recording medium having a multilayer structure. The following is a description of an example in which a write-once material is used for all of the first through fourth recording layers 102, 202, 302, and 402. Among such materials, materials containing an oxide are used as a recording material of an optical information recording medium including multiple information layers because a very high transmittance can be realized by adjusting the composition of these materials. Specifically, the recording material includes materials based on Te-O-M (where M is a material containing at least one element selected from the group consisting of metal elements, semimetal elements, and semiconductor elements) such as Te-O-Pd and Te-O-Au. A recording mechanism of such recording materials based on Te-O-M seems to be as follows.

Te-O-M is a composite material in which tiny particles of Te, Te-M, and M are dispersed uniformly in TeO$_2$ immediately after the film is formed. When Te-O-M is irradiated with a laser beam, the film is melted, and consequently Te, Te-M, and M are precipitated in the form of a larger crystal grain, so that the optical state is changed and the difference can be detected in the form of a signal.

The material M is added in order to promote crystallization of Te, and this effect can be achieved, as long as M is an element that can form a bond with Te. A Te crystal has a structure in which chain structures in which Te atoms lie in spirals by a covalent bond are held together by weak van der Waals forces. In order to melt Te, it is sufficient to break off the weak van der Waals bond, so that Te has a relatively low melting point of about 452˚C. However, at this time, the crystallization rate is low because the spiral structures remain. It is believed that in the recording materials in this embodiment, the material M that can form a bond with Te is added, so that the material M and Te form a crosslinking structure, and a structure that is different from the above-described chain structure of Te atoms is provided, and thus the crystallization rate can be increased.

Specific examples of the material M include at least one element selected from the group consisting of Pd, Au, Pt, Ag, Cu, Sb, Bi, Ge, Sn, In, Ti, Zr, Hf, Cr, Mo, W, Co, Ni, Zn and the like, and mixtures containing plural elements of these elements are also possible. In particular, when the material M contains at least one selected from the group consisting of Pd, Au, Pt, Ag, Cu, Sb, Bi, Ge, Sn, and In, the crosslinking structure with Te atoms can be formed more effectively, so that the crystallization rate can be further increased easily.

It is preferable that the film thickness of each of the first through fourth recording layers 102, 202, 302, and 402 is 3 nm or more and 80 nm or less. The reason for this is that by setting the film thickness to 3 nm or more, a recording material can be made into a layer easily, so that good signals can be obtained. Moreover, by setting the film thickness to 80 nm or less, thermal diffusion in the plane of each recording layer can be suppressed, so that when recording is performed with a high density, the thermal effect on adjacent marks that already have been written can be suppressed. Moreover, it is preferable that an even smaller film thickness of 20 nm or less is employed as the film thickness of each of the first through fourth recording layers 102, 202, 302, and 402 because the transmittance of the first through third information layers 1 through 3 can be maintained at a high level.

The first through fourth information layers 1 through 4 are designed such that optical changes in the respective first through fourth recording layers 102, 202, 302, and 402 result in optically detectable changes such as a change in reflectance, a change in phase difference, and a change in absorptivity for the laser beam.

In the optical information recording medium in this embodiment, materials of the first through third recording layers 102, 202, and 302 are varied so that the difference in the transmittance of each of the first through third information layers 1 through 3 between a state (state.A) in which recording has not been performed and a state (state B) in which recording has been performed becomes as small as possible. In the optical information recording medium in this embodiment, provided that the transmittance of a j-th information layer at the time when a j-th (j = 1, 2, 3) recording layer is in the state A is TAj (%) and the transmittance of the j-th information layer at the time when the j-th recording layer is in the state B is TBj (%), the following relationship is satisfied in each of the first through third information layers 1 through 3:

$$0 \leq |TAj - TBj| / (TAj, TBj)max \leq 0.10 \qquad (1)$$

where (TAj,TBj)max is a larger value of TAj and TBj. Furthermore, it is preferable that, in particular, in the first information layer 1, the following relationship is satisfied.

$$0 \leq |TA1 - TB1| / (TA1, TB1)max \leq 0.08 \qquad (2)$$

By satisfying the above relationship (1) (preferably, by further satisfying the relationship (2)), even when signals have been recorded in an information layer located on the near side when viewed from the laser beam incidence side, the quantity of the laser beam that has reached an information layer located on the far side can be almost constant, regardless whether or not recording has been performed in the information layer on the near side. Thus, an optical information recording medium having a multilayer structure in which recording/reproduction can be performed correctly and stably can be realized.

In order to satisfy the above relationship (1) in the first through third information layers 1 through 3, it is often necessary to adjust satisfactorily the complex index of refraction in the recording layer included in each of the information layers. That is, it is not always the case that transmittances of TAj and TBj satisfy the relationship (1) (the difference in the transmittance is reduced sufficiently) under the conditions (e.g., type of material and composition ratio) that provide the maximum amount of change in the optical characteristics of each of the recording layers, so that it is preferable to adjust the conditions of each of the recording layers such that the difference in the transmittance between the state A and the state B can be reduced while maintaining the amount of change in the optical characteristics. In this embodiment, at least one of the first through third recording layers 102, 202, and 302 is formed of a material having a complex index of refraction that is different from the complex index of refraction of the fourth recording layer 402. More preferably, all of the first through third recording layers 102, 202, and 303 are formed of materials having a complex index of refraction that is different from that of the fourth recording layer 402. To reproduce signals recorded in the fourth information layer 4, a light that has passed through the first through third information layers 1 through 3 and the quantity of which has been attenuated is used, so that it is necessary to design the fourth information layer 4 so as to have a high signal strength, and therefore the fourth recording layer 402 is formed of a material in which the optical characteristics change significantly. On the other hand, in the first through third information layers 1 through 3, it is necessary that the difference in the transmittance between the state A and the state B is small and also the transmittance is high, but the amount of change in the optical characteristics may be smaller than that in the fourth information layer 4. Therefore, at least one of (preferably, all of) the first through third recording layers 102, 202, and 302 is formed of a material having a complex index of refraction that is different from that of the fourth recording layer 402. Specifically, optical design is carried out using materials having a different type or materials having a different composition ratio between the first through third recording layers 102, 202 and 302 and the fourth recording layer 402 so that the relationship (1) is satisfied. In particular, in an information layer provided in a position nearest to the laser beam incidence side (in this embodiment, the first information layer 1), it is preferable to keep the difference in the transmittance smaller than that in the other layers because the laser beam always passes through this layer at the time of recording/reproduction on/from the second and the following information layers.

Specifically, when the difference in the refractive index between the case where the fourth recording layer 402 is in the state A and the case where it is in the state B is $\Delta n4$, the difference in the extinction coefficient therebetween is $\Delta k4$, the difference in the refractive index between the case where the j-th (j = 1, 2, 3) recording layer is in the state A and the case where it is in the state B is $\Delta nj$, and the difference in the extinction coefficient therebetween is $\Delta kj$, then it is preferable that the following relationship is satisfied in at least one recording layer of the first through third recording layers 102, 202, and 302.

$$|\Delta n4| + |\Delta k4| > |\Delta nj| + |\Delta kj| \qquad (3)$$

Thus, the information layer can be designed such that the relationship (1) can be satisfied more easily.

In order to adjust the complex index of refraction of a recording layer to a value with which the difference in the transmittance of an information layer between the state A and the state B can be reduced, the type of a material of the recording layer and the composition ratio thereof can be adjusted. At this time, a material that is different from the main component of the recording layer may be added to the extent that the change of the state of the recording layer is not inhibited, for the purpose of adjusting the complex index of refraction. As an additional material other than the main component of the recording layer, for example, noble metals such as Pd and Pt, elements such as boron, carbon, nitrogen, oxygen and fluorine, or their appropriate mixtures are preferably used. Noble metals such as Pd and Pt are relatively unlikely to form a compound with other materials, so that the complex index of refraction of a recording layer can be changed without changing the characteristics of the main component of the recording layer significantly. Elements such as boron, carbon, nitrogen, oxygen, and fluoride also are used preferably as additives for the same reason.

Generally, provided that the refractive index and the extinction coefficient in the case where the j-th recording layer is in the state A are naj and kaj, respectively, and the refractive index and the extinction coefficient in the case where it is in the state B are nbj and kbj, respectively, when naj + kaj and nbj + kbj are extremely different in magnitude, the difference in the absorptivity between the state A and the state B is increased extremely, and thus the difference in the transmittance of the j-th information layer between the state A and the state B also is increased. That is, it becomes relatively difficult to reduce the difference in the transmittance of the j-th information layer between the state A and the state B. Therefore, it is advantageous to carry out optical design so as to provide a recording mechanism in which a relatively large difference in the reflectance of the j-th information layer is generated between the state A and the state B and reduce the reflectance that is provided in the state in which absorptivity is high in order to decrease the difference in the transmittance.

However, when multiple information layers are laminated, it is often impossible to carry out a design such that this difference in the reflectance is very large in an information layer located in a relatively near position. For example, in the case of four information layers like the optical information recording medium in this embodiment, the difference in the reflectance is about 3 to 10%. The reason for this is that when reproducing information from an information layer on the far side, the signal amplitude is attenuated as a result of using a light that has passed through a plurality of information layers, so that it is necessary to adjust the information layers on the near side to the level of this attenuated signal amplitude. Therefore, it is preferable to design the information layers arranged on the near side such that the value of (naj + kaj) - (nbj + kbj) is reduced. This is because it becomes difficult for the difference in the absorptivity between the state A and the state B to be generated, and consequently the difference in the transmittance can be reduced. For this reason, it is preferable to produce each information layer such that a relationship as below is satisfied.

$$(nam + kam) - (nbm + kbm) > (naj + kaj) - (nbj + kbj) \qquad (4)$$

It should be noted that in the relationship (4), m indicates the fact that the refractive index and the extinction coefficient are associated with an information layer (the fourth information layer 4) provided in the farthest position when viewed from the laser beam incidence side.

In the first through third information layers 1 through 3, it is preferable that the average transmittance ((TAj + TBj) / 2, where j=1, 2, 3) between the state A and the state B is set to 50% or more. In particular, in the case of an optical information recording medium constituted by three or more information layers like the optical information recording medium in this embodiment, it is preferable that information layers other than the information layer arranged in the farthest position have an even higher average transmittance. For example, regarding the optical information recording medium in this embodiment, by setting the average transmittance of the first information layer 1 to 80% or more and both the average transmittance of the second information layer 2 and the average transmittance of the third information layer 3 to 70% or more, a balance in the four information layers can be attained easily.

In order to obtain optically designed values of the above-described transmittance and reflectance, a method that is referred to as a so-called matrix method can be used (e.g., see Hiroshi Kubota, "Wave Optics", Iwanami Shoten, Chapter 3).

The complex index of refraction of each layer can be measured using a spectroscope, an ellipsometer and the like. As a measurement sample, a film that is formed of a material to be measured on an appropriate substrate such as Si and $SiO_2$ and has a thickness that allows measurement of the complex index of refraction can be used. The material of each layer can be identified using an analysis procedure such as ESCA (electron spectroscopy for chemical analysis), AES (Auger electron spectroscopy), and SIMS (secondary ion mass spectrometry), and a measurement sample can be produced so as to be of a material corresponding to this.

The transmittance can be measured by a spectroscope, using a film of an information layer to be measured that is formed on a transparent substrate. Alternatively, measurement also can be carried out by forming an information layer to be measured as the information layer on the near side when viewed from the laser beam incidence side on only a portion of a substrate and then producing an appropriate information layer having a constant reflectance on the far side, and subsequently determining how much the quantity of light reflected by the information layer on the far side is reduced by the presence of the information layer on the near side by an evaluation drive.

It should be noted that the optical information recording medium of the present invention is not limited to the configuration shown in FIG. 1 and can be applied to various types of configurations. For example, an interface layer that is in contact with any of the first through fourth recording layers 102, 202, 302, and 402 may be newly added, or each of the protective layers 101, 103, 201, 203, 301, 303, 401, and 403 may be formed of two layers. In particular, when using a write-once recording material, a configuration in which any of the protective layers 101, 103, 201, 203, 301, 303, 401, and 403 is eliminated, if necessary, is also possible. Moreover, a configuration in which two of the optical information recording medium shown in FIG. 1 are attached on the substrate 5 side and the laser beam is incident from both the sides is also possible. The present invention can be applied to various types of other configurations.

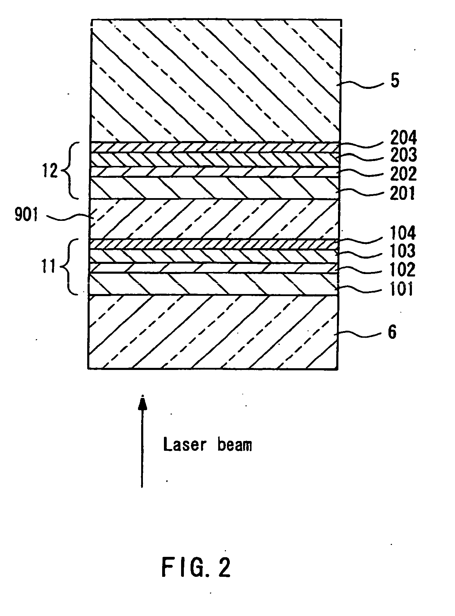

Furthermore, although the optical information recording medium in which four information layers are laminated is shown in this embodiment, the number of information layers to be laminated is not limited to four, and when a different number of information layers are to be laminated, it is also possible to carry out a design such that the difference in the transmittance is reduced by adjusting a material to be used for a recording layer. For example, a structure in which two information layers (a first information layer 11 and a second information layer 12) are laminated as shown in FIG. 2 is also possible. An optical information recording medium shown in FIG. 2 has a structure in which the first information layer 11, an intermediate layer 901, and the second information layer 12 are laminated in this order from the laser beam incidence side between a substrate 5 and a substrate 6. The first information layer 11 and the second information layer 12 have the same film structures as the first information layer 1 and the second information layer 2 of the optical information recording medium shown in FIG. 1, except that respective reflective layers 104 and 204 are further provided on the side opposite to the laser beam incidence side. Moreover, as in the case with the optical information recording medium shown in FIG. 1, in the optical information recording medium shown in FIG. 2, the first recording layer 102 and the second recording layer 202 are formed of write-once materials that have different complex indices of refraction from each other so that the above relationship (1) is satisfied. The reflective layers 104 and 204 can be formed using the same material as the reflective layer 404 of the optical information recording medium shown in FIG. 1.

Next, a method for manufacturing the optical information recording medium in this embodiment shown in FIG. 1 will be described. As a method for producing a multilayer film constituting the optical information recording medium in this embodiment, methods such as sputtering, vacuum deposition, and CVD method can be applied. As a film-forming gas, a gas with which a film can be formed, for example, a rare gas such as Ar and Kr can be used. For example, when using sputtering, it is also possible to use a mixed gas of a rare gas and a trace amount of nitrogen, oxygen or the like to perform reactive sputtering

When a nitride, an oxide or a oxynitride is used as a main component constituting the protective layers 101, 103, 201, 203, 301, 303, 401, and 403, it is preferable to use reactive sputtering, because a film of good quality often can be obtained. For example, when the protective layers 101, 103, 201, 203, 301, 303, 401, and 403 are formed of Si-N, a material containing at least Si is used as a target, and a mixed gas of a rare gas and nitrogen, a mixed gas of a rare gas and a gas containing nitrogen atoms such as $N_2O$, $NO_2$, $NO$ and $N_2$, or a mixed gas of a rare gas and a gas constituted by an appropriate combination of gasses containing nitrogen atoms as described above may be used as a film-forming gas.

Moreover, when producing the first through fourth recording layers 102, 202, 302 and 402, and the protective layers 101, 103, 201, 203, 301, 303, 401 and 403, a mixed gas of a rare gas and a trace amount of nitrogen or a trace amount of oxygen may be used. In particular, in a process of forming a film of an information layer made of a rewritable material, it is preferable to use a mixed gas in which nitrogen is mixed with a rare gas. In this case, the thermal conductivity of the information layer can be reduced, so that thermal diffusion in the film plane of the information layer at the time of irradiation with a laser beam can be suppressed, and thus adjacent erasure (erasure of adjacent recorded marks due to diffusion of heat in the inplane direction) can be suppressed. Moreover, in this case, the strength of the film is increased, so that there is also an advantage that the repeated recording property is improved in the case of a recording material in which a reversible change occurs.

When using a phase change recording material to form a rewritable information layer, it is common that an energy irradiation process such as irradiating a recording layer with a strong laser beam in order to change the recording layer into a crystalline state further is included after or during manufacturing an optical information recording medium. Thus, information can be rewritten easily from the beginning. However, in order to omit this crystallization process, it is preferable that a recording layer is formed of a material that is easy to crystallize so that the state immediately after the recording layer is formed is a crystalline state, or a method such as forming a thin film of a recording material that can be formed with crystallization before the process of forming a recording layer, and then forming a recording layer is performed.

In an optical information recording medium in which multiple information layers are laminated, a process for initializing all of the information layers becomes complicated as the number of layers increases, so that it may be difficult to achieve sufficient stability for a focusing operation. In such a case, it is preferable to form a recording layer with crystallization. At this time, it is preferable not only in that the process of crystallizing the recording layer can be omitted and the cost can be reduced, but also in that the other information layers are prevented from being unnecessarily damaged by heat as a result of undergoing the crystallization process. Crystallization of a recording layer after the film is formed can be realized, for example, by providing a process of forming a film of a material that is a crystal immediately after the film is formed, such as Sb, Sn-Te and Bi-Te, before the process of forming the recording layer.

Regarding the order in which the layers of the optical information recording medium in this embodiment are produced, films are formed in the order from the reflective layer 404 side to the protective layer 401 on the substrate 5, and further a groove shape is transferred to the intermediate layer 903 formed of an ultraviolet curable resin or the like, and then the third information layer 3, the intermediate layer 902, the second information layer 2, the intermediate layer 901, and the first information layer can be formed in this order in the same manner. The light transparent layer 6 may be formed, for example, by attaching a base material having an adhesive resin on one surface to the laminate that is formed with the fourth through first information layers 4 through 1 on the substrate 5 or by attaching a base material in the form of a sheet with an ultraviolet curable resin to the laminate. Alternatively, as another method for producing the optical information recording medium, a method of attaching the fourth information layer 4 and the third information layer 3 formed in this order on the substrate 5 by the same method to the first information layer 1 and the second information layer 2 formed in this order on the light transparent layer 6 to which the groove shape has been transferred via the intermediate layer 902 also can be employed.

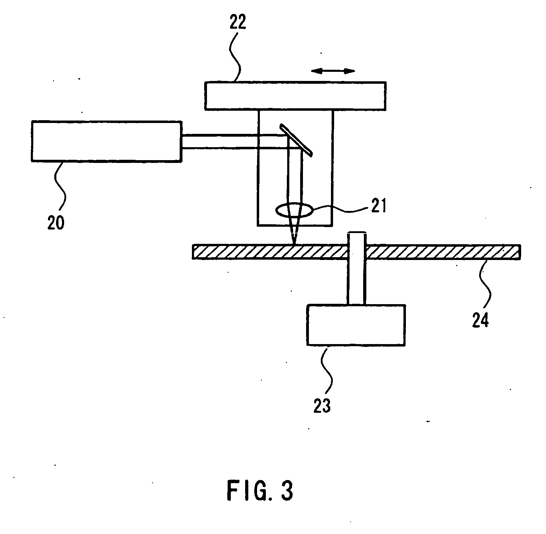

Next, an example of a method for recording/reproducing information on/from the optical information recording medium that is formed in such a manner as described above will be described. FIG. 3 shows, in the case where the optical information recording medium in this embodiment is an optical disk 24, an outline of an example of an information recording/reproducing apparatus that is used when information is recorded/reproduced on/from this optical disk 24. The information recording/reproducing apparatus capable of recording, reproducing and erasing signals is provided with a laser beam source 20, an optical head equipped with an objective lens 21, a drive device 22 for guiding a position to be irradiated with a laser beam to a predetermined position, a tracking control device (not shown) for controlling positions in the direction of a track, a focusing control device (not shown) for controlling positions in the direction perpendicular to the film plane, a laser drive device (not shown) for modulating the laser power, and a rotation control device 23 for rotating the optical disk 24.

Signals are recorded, erased, and reproduced by rotating the optical disk 24 using the rotation control device 23 first and focusing a laser beam on a micro spot by an optical system to irradiate the optical disk 14. Reproduction of signals is performed as follows: the disk is irradiated with a laser beam with a power at a power level lower than that in the cases of recording and erasing signals, so that the optical state of recorded marks is not affected by irradiation with the laser beam at that power level, the power allowing a sufficient quantity of light for reproducing the recorded marks to be obtained from the optical disk 24 by irradiation. The obtained signals from the optical disk 14 are read out by a detector (not shown).

[Examples]

Hereinafter, the present invention will be described further in detail by way of examples. However, the present invention is not limited to these examples.

(Example 1)

In Example 1, the optical information recording medium shown in FIG. 1 was produced. In the optical information recording medium in this example, all of the first through fourth recording layers 102, 202, 302, and 402 were formed of a write-once material of Te-O-Pd, and the composition ratio was changed between the recording layers included in the respective information layers so that a value of the difference in the transmittance was varied in the information layers. In the optical information recording medium in this example, the state (hereinafter, referred to as "as depo. state") immediately after a film was formed was an unrecorded state, and when marks were recorded with an appropriate laser power, the reflectance in the mark portion was decreased. At this time, the mark portion was in the crystalline state. That is, in the optical information recording medium in this example, the as depo. state and the crystalline state correspond to the state A and the state B, respectively.

A method for producing the optical information recording medium in this example is as follows.

A disk-shaped polycarbonate plate having a thickness of 1.1 mm and a diameter of 120 mm was used as the substrate 5 and a spiral groove having a width of 0.16 $\mu$m, a groove pitch of 0.32 $\mu$m, and a depth of 20 nm was formed on its surface. All of the protective layers 101, 103, 201, 203, 301, 303, 401, and 403 were produced using a material in which $SiO_2$ is mixed with ZnS (ZnS: 80 mol%, $SiO_2$: 20 mol%) and the reflective layer 404 was produced using Al-Cr. Films of the fourth information layer 4 were formed successively in the order from the reflective layer 404 side by sputtering on the surface of the substrate 5 where the groove was formed. Then, the intermediate layer 903 was formed by applying an ultraviolet curable resin onto the surface of the protective layer 401, transferring the same groove as that of the substrate 5 to the surface, and curing the resin. Then, the third information layer 3, the intermediate layer 902, the second information layer 2, the intermediate layer 901, and the first information layer were formed in this order using the same method. Finally, the light transparent layer 6 was formed by adhering a sheet made of polycarbonate with an ultraviolet curable resin.

Table 1 shows the film thickness of each layer included in each medium sample and the optical characteristics thereof. Table 2 shows the composition ratio of the recording layers in each medium sample.

(Table 1)

| medium No. | information layer No. | film thickness of each layer [nm] | | | | recording layer oxygen flow rate | optical constant of recording layer | | | | optical characteristics of each information layer alone | | | | | | | optical characteristics in laminated layers | |
|---|---|---|---|---|---|---|---|---|---|---|---|---|---|---|---|---|---|---|---|
| | | lower protective layer | recording layer | upper protective layer | reflective layer | | naj | kaj | ncj | kcj | Ra (%) | Rc (%) | ΔR %) | Ta (%) | Tc (%) | (Ta+Tc) /2 (%) | (Ta-Tc) /Ta | eff. Ra (%) | eff. ΔR (%) |
| (0) | 4 | 44 | 20 | 33 | 40 | 22 sccm | 2.5 | 0.38 | 2.0 | 1.10 | 30 | 7 | 23 | 1 | 1 | 1.0 | - | 4.6 | 3.6 |
| | 3 | 22 | 15 | 11 | 0 | 22 sccm | 2.5 | 0.38 | 2.0 | 1.10 | 9 | 3 | 6 | 74 | 63 | 68.5 | 0.15 | 2.9 | 1.9 |
| | 2 | 17 | 10 | 6 | 0 | 22 sccm | 2.5 | 0.38 | 2.0 | 1.10 | 8 | 3 | 5 | 78 | 69 | 73.5 | 0.12 | 4.8 | 3.0 |
| | 1 | 11 | 8 | 6 | 0 | 22 sccm | 2.5 | 0.38 | 2.0 | 1.10 | 6 | 3 | 3 | 82 | 73 | 77.5 | 0.11 | 6.0 | 3.0 |
| (1) | 4 | 44 | 20 | 33 | 40 | 22 sccm | 2.5 | 0.38 | 2.0 | 1.10 | 30 | 7 | 23 | 1 | 1 | 1.0 | - | 4.4 | 3.4 |
| | 3 | 22 | 15 | 11 | 0 | 22 sccm | 2.5 | 0.38 | 2.0 | 1.10 | 8 | 2 | 6 | 70 | 64 | 67.0 | 0.09 | 2.6 | 2.0 |
| | 2 | 22 | 10 | 11 | 0 | 16 sccm | 2.5 | 0.50 | 2.0 | 1.00 | 9 | 4 | 5 | 75 | 72 | 73.5 | 0.04 | 5.5 | 3.0 |
| | 1 | 11 | 8 | 3 | 0 | 16 sccm | 2.5 | 0.50 | 2.0 | 1.00 | 5 | 2 | 3 | 80 | 76 | 78.0 | 0.05 | 5.0 | 3.0 |
| (2) | 4 | 55 | 20 | 33 | 40 | 26 sccm | 2.5 | 0.25 | 2.0 | 1.00 | 30 | 6 | 24 | 1 | 1 | 1.0 | - | 4.1 | 3.3 |
| | 3 | 22 | 15 | 22 | 0 | 24 sccm | 2.5 | 0.30 | 2.0 | 1.05 | 16 | 8 | 8 | 66 | 61 | 63.5 | 0.08 | 5.4 | 2.7 |
| | 2 | 22 | 10 | 11 | 0 | 22 sccm | 2.5 | 0.38 | 2.0 | 1.10 | 9 | 4 | 5 | 77 | 72 | 74.5 | 0.06 | 5.5 | 3.0 |
| | 1 | 11 | 8 | 3 | 0 | 16 sccm | 2.5 | 0.50 | 2.0 | 1.00 | 5 | 2 | 3 | 80 | 76 | 78.0 | 0.05 | 5.0 | 3.0 |

(Table 2)

| medium No. | recording layer No. | composition ratio (at%) | | |
|---|---|---|---|---|
| | | Te | O | Pd |
| (0) | fourth recording layer | 36.0 | 54.0 | 10.0 |
| (0) | third recording layer | 36.0 | 54.0 | 10.0 |
| (0) | second recording layer | 36.0 | 54.0 | 10.0 |
| (0) | first recording layer | 36.0 | 54.0 | 10.0 |
| (1) | fourth recording layer | 36.0 | 54.0 | 10.0 |
| (1) | third recording layer | 36.0 | 54.0 | 10.0 |
| (1) | second recording layer | 38.0 | 51.0 | 11.0 |
| (1) | first recording layer | 38.0 | 51.0 | 11.0 |
| (2) | fourth recording layer | 32.0 | 60.0 | 8.0 |
| (2) | third recording layer | 34.0 | 57.0 | 9.0 |
| (2) | second recording layer | 36.0 | 54.0 | 10.0 |
| (2) | first recording layer | 38.0 | 51.0 | 11.0 |

In Table 1, a lower protective layer refers to a protective layer located on the laser beam incidence side when viewed from a recording layer in each information layer, and an upper protective layer refers to a protective layer located on the side opposite to the laser beam incidence side when viewed from a recording layer. Here, a medium sample (1) had the same the configuration as that shown in FIG. 1. In a medium sample (2), also the third information layer 3 was provided with a reflective layer made of Ag-Pd-Cu and having a film thickness of 10 nm on the side opposite to the laser beam incidence side of the protective layer 303. The medium sample (2) had the same configuration as that shown in FIG. 1, except that the third information layer 3 was provided with the reflective layer.

In Table 1, naj and kaj indicate the refractive index and the extinction coefficient, respectively, in the case where the recording layers are in the as depo. state, and ncj and kcj indicate the refractive index and the extinction coefficient, respectively, in the case where the recording layers are in the crystalline state. The complex index of refraction of each recording layer was measured by a spectroscope using a sample made by producing a thin film on a quartz substrate under the film formation conditions identical with those in the process of forming the recording layer. The complex index of refraction in the crystalline state was measured using a spectroscope as well after annealing this sample to a predetermined temperature at which the recording layer becomes the crystalline state.

The complex indices of refraction of the first through fourth recording layers 102, 202, 302, and 402 in each medium sample are as shown in Table 2. In the medium sample (1), the first recording layer 102 and the second recording layer 202 are formed with the same composition ratio, and the third recording layer 302 and the fourth recording layer 402 are formed with the same composition ratio. In the medium sample (2), all of the first through fourth recording layers 102, 202, 302, and 402 are formed using a composition ratio that is different from one another. In a medium sample (0) that is shown for comparison, all of the first through fourth recording layers 102, 202, 302, and 402 are formed of a material of the same composition having the same complex index of refraction, and thus medium sample (0) does not fall within the scope of the claims.

The film thickness of each protective layer was adjusted such that the levels of the reflectance of signals from all of the information layers became almost equal, and the protective layers were designed such that the transmittance of each information layer became as high as possible and also the difference in the transmittance between the recorded state and the unrecorded state became as small as possible within the range in which this adjustment was possible.

Moreover, in Table 2, Ra indicates the reflectance in the case where each recording layer is in the as depo. state and Rc indicates the reflectance in the case where each recording layer is in the crystalline state, and Ta and Tc (corresponding to TAj and TBj) indicate the transmittance in the case where each recording layer is in the as depo. state and the transmittance in the case where each recording layer is in the crystalline state, respectively. Ra - Rc was represented by ΔR. Ra and Rc were measured by an evaluation drive using samples in which each information layer alone was formed on substrates, and Ta and Tc were measured by a spectroscope using samples in which each film alone was formed in the same manner. A crystalline portion of the information layer was produced by irradiating with a laser beam under appropriate conditions using an initializing apparatus.

Furthermore, in Table 1, eff. Ra and eff. ΔR indicate the reflectance in the as depo. state measured by the evaluation drive and the difference in the reflectance between the as depo. state and the crystalline state, respectively, in the case where four information layers were laminated and a target information layer was irradiated with a laser beam. According to these results, it is found that in the state where the four information layers are laminated, the reflectivities and the differences in reflectance are in substantially the same level in the four information layers.

All of the medium samples (0) through (2) were produced such that the light transparent layer 5 and the intermediate layers 901, 902, and 903 were 60 μm, 12 μm, 15 μm, and 18 μm, respectively, in thickness.

When forming the protective layers 101, 103, 201, 203, 301, 303, 401, and 403, Ar gas was supplied such that the total pressure was 0.13 Pa, and a RF power of 5.10 W/cm² was applied to a cathode. When forming the reflective layer 404, Ar gas was supplied such that the total pressure was 0.13 Pa, and a DC power of 4.45 W/cm² was applied. When forming the first through fourth recording layers 102, 202, 302, and 402, a target having an atom ratio of Te : Pd = 80 : 20 was used, a mixed gas of Ar and oxygen was supplied such that the total pressure was 0.13 Pa, and a DC power of 1.27 W/cm² was applied to a cathode.

In the medium sample (1) and the medium sample (2), the composition of each recording layer was adjusted by changing the ratio between Ar and oxygen in a film-forming gas in forming the first through fourth recording layers 102, 202, 302, and 402. Specifically, for the first and the second recording layers of the medium sample (1), the flow rates of Ar gas and oxygen gas in a film-forming gas were set to $4.2 \times 10^{-7}$ m³/s (25 sccm) and $2.7 \times 10^{-7}$ m³/s (16 sccm), respectively. For the third and the fourth recording layers, the flow rates were set to $4.2 \times 10^{-7}$ m³/s (25 sccm) and $3.7 \times 10^{-7}$ m³/s (22 sccm), respectively. Also for the medium sample (2), the flow rate of Ar gas was kept constant at $4.2 \times 10^{-7}$ m³/s (25 sccm). The flow rates of oxygen gas were set to $2.7 \times 10^{-7}$ m³/s (16 sccm), $3.7 \times 10^{-7}$ m³/s (22 sccm), $4.0 \times 10^{-7}$ m³/s (24 sccm), and $4.3 \times 10^{-7}$ m³/s (26 sccm) with respect to the first, the second, the third, and the fourth recording layers, respectively. For the medium sample (0), the flow rate of Ar gas was set to $4.2 \times 10^{-7}$ m³/s (25 sccm) and the flow rate of oxygen gas was set to $3.7 \times 10^{-7}$ m³/s (22 sccm) with respect to all of the first through fourth recording layers. It was confirmed by XMA (X-ray microanalyzer) method that in the recording layers produced in such a manner as described above, the higher the oxygen flow rate was, the larger the quantity of oxygen captured in the film became (concentration of oxygen atoms increased).

When recording/reproducing signals, a laser beam having a wavelength of 405 nm was used and the numerical aperture of the objective lens was set to 0.85. 1-7PP modulation was used as a signal modulation system, the 2T mark length was set to 0.159 μm, and the disk rotational speed was set to a linear velocity of 5.28 m/s.

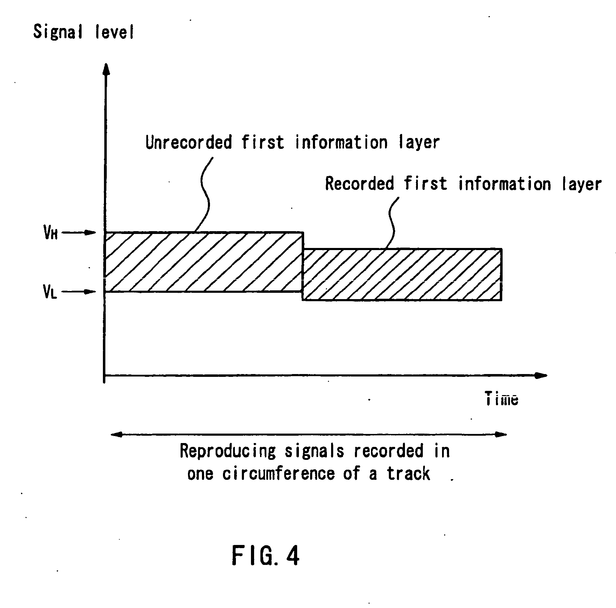

The effects of the difference in the transmittance of an information layer located on the near side were evaluated in the following manner. First, signals were recorded in a half of the circumference of each track at a wide range of positions in the radius (e.g., entire area from 25 mm to 35 mm in the radius) in the first information layer 1, and then recording was performed in the second information layer 2 at a position in the radius (e.g., in the above case, 30 mm) that corresponds to the position in the first information layer in which the signals were recorded. FIG. 4 shows an envelope of signals during reproduction from the second information layer 2 at this time. As shown in FIG. 4, the amplitude of the envelope of the reproduction signals varies according to whether or not recording has been performed in the first information layer. The reason for this is that since the transmittance of the first information layer 1 differs according to whether or not recording has been performed, the quantity of light in reproducing from the second information layer 2 through the first information layer 1 differs. Here, the difference in the transmittance of the first information layer 1 was evaluated by obtaining the coefficient of variation $(V_H - V_L) / V_H$ of the envelope (where $V_H$ represents the highest level of the signal amplitude and $V_L$ represents the lowest level of the signal amplitude). When evaluating the third information layer 3, similarly, the following areas were produced: an area in 1/4 of the track in which recording was performed in both of the first and the second information layers; an area in another 1/4 in which recording was performed in the first information layer 1 but was not performed in the second information layer 2; an area in another 1/4 in which recording was not performed in the first information layer 1 but was performed in the second information layer 2; and an area in the other 1/4 in which recording was not performed in either of the first and the second information layers. Then, recording was performed in the third information layer 3. The coefficient of variation shown was taken when the variation of the envelope was maximal. Regarding the fourth information layer 4, recording was performed in the same manner in each 1/8 of the track such that all the situations made by combining the recorded state and the unrecorded state in the first through third information layers were included, and then recording was performed, and the maximum coefficient of variation of the envelope was determined.

At the same time, the error rate of reproduction signals was determined with respect to all of the information layers. Table 3 shows the results of the evaluation performed on all of the information layers in all of the above medium samples.

(Table 3)

| medium No. | information layer No. | coefficient of variation | error rate |
|---|---|---|---|
| (0) | 4 | × | × |
| | 3 | × | × |
| | 2 | × | × |
| | 1 | ◎ | ◎ |
| (1) | 4 | ○ | ○ |
| | 3 | ◎ | ◎ |
| | 2 | ◎ | ◎ |
| | 1 | ◎ | ◎ |
| (2) | 4 | ◎ | ◎ |
| | 3 | ◎ | ◎ |
| | 2 | ◎ | ◎ |
| | 1 | ◎ | ◎ |

Here, the coefficient of variation in the range of less than 5% was indicated by ◎, that in the range of 5% or more and less than 10% was indicated by ○, and that outside these ranges was indicated by ×. The error rate in the range of less than $1 \times 10^{-4}$ was indicated by ◎, that in the range of $1 \times 10^{-4}$ or more and less than $1 \times 10^{-3}$ was indicated by ○, and that outside these ranges was indicated by ×.

According to Table 3, in the medium samples (1) and (2), the error rate is improved compared to the medium sample (0), which is a comparative example. It is believed that the reason for this is that since, in the medium sample (1) and the medium sample (2), the difference in the transmittance between the case where recording has been performed and the case where recording has not been performed is small in the information layer located on the near side, the coefficient of variation of the envelope is low and the error rate is decreased.

When information layers in which the difference in the transmittance between the recorded state and the unrecorded state was small but the average transmittance (Ta + Tc) / 2 between the as depo. portion and the crystalline portion was smaller than 50% were produced as the first through third information layers 1 through 3, the coefficient of variation of the envelope was small, but the farther the position of the information layer was, the higher the error rate was. It is believed that the reason for this is that since the transmittance of the information layer on the near side is low, a sufficient quantity of the laser beam cannot be obtained during recording/reproduction on/from the information layer on the far side.

The difference in the transmittance could be reduced by changing the concentration of Pd atoms contained in the recording layer, and the same effects as in the case of changing the concentration of oxygen atoms were achieved.

(Example 2)

In Example 2, the optical information recording medium shown in FIG. 2 was produced. In the optical information recording medium in this example, both of the first and the second recording layers 102 and 202 were formed of a write-once material of Te-O-Pd and the difference in the transmittance in each information layer was adjusted by changing the composition ratio.

A method for producing the optical information recording medium in this example is as follows.

A disk-shaped polycarbonate plate having a thickness of 1.1 mm and a diameter of 120 mm was used as the substrate 5 and a spiral groove having a width of 0.16 $\mu$m, a groove pitch of 0.32 $\mu$m, and a depth of 20 nm was formed on its surface. The second information layer 12 was formed by sputtering from the reflective layer 204 side on the surface of the substrate 5 where the groove was formed.

The reflective layer 204 was formed using Al-Cr and had a thickness of 40 nm. The protective layer 203 was formed using a material in which $SiO_2$ is mixed with ZnS (ZnS: 80 mol%, $SiO_2$: 20 mol%) and had a thickness of 17 nm. The second recording layer 202 was formed using Te-O-Pd (Te: 30.0 at%, O: 65.0 at%, Pd: 5.0 at%) and had a thickness of 30 nm. Specifically, a target of Te-Pd (Te: 90 at%, Pd: 10 at%) was used and a mixed gas of Ar gas and oxygen gas was used as a film-forming gas. The flow rates of Ar gas and oxygen gas were set to $4.2 \times 10^{-7}$ (25 sccm) and $4.7 \times$

$10^{-7}$ (28 sccm), respectively. The protective layer 201 was formed in the same manner as the protective layer 203 and had a thickness of 6 nm.

Then, the intermediate layer 901 with a thickness of 25 $\mu$m was formed. Specifically, it was formed by applying an ultraviolet curable resin onto the protective layer 201, transferring the same groove as that of the substrate 5 to the surface, and curing the resin.

Then, the first information layer 11 was formed from the reflective layer 104 side. The reflective layer 104 was formed using Ag-Pd-Cu and had a thickness of 10 nm. The protective layer 103 was formed using a material in which LaF is mixed with Zr-Si-Cr-O and had a thickness of 15 nm. The first recording layer 102 was formed using Te-O-Pd (Te: 36.7 at%, O: 53.0 at%, Pd: 10.3 at%) and had a thickness of 10 nm. Specifically, a target of Te-Pd (Te: 80 at%, Pd: 20 at%) was used and a mixed gas of Ar gas and oxygen gas was used as a film-forming gas. The flow rates of Ar gas and oxygen gas were set to $4.2 \times 10^{-7}$ (25 sccm) and $3.3 \times 10^{-7}$ (20 sccm), respectively. The protective layer 101 was formed in the same manner as the protective layers 201 and 202 of the second information layer 12 and had a thickness of 22 nm.

As described above, in the optical information recording medium in this example, the first recording layer 102 had a lower concentration of oxygen atoms and a higher concentration of Pd atoms in the film than those in the second recording layer 202. In such an optical information recording medium, the optical characteristics were measured in the same manner as in Example 1, and further the envelope and the error rate of reproduction signals were measured for evaluation. As a result, the difference in the transmittance between the recorded state and the unrecorded state in the first information layer 11 could be reduced so that the relationship (1) was satisfied, and the coefficient of variation of the envelope and the error rate could be suppressed to low levels.

From the foregoing, it was confirmed that correct signals could be obtained during recording/reproduction on/from the information layer on the far side by adjusting the complex index of refraction of the recording layer in the information layer located on the near side so that the difference in the transmittance of the information layer on the near side between the recorded state in this recording layer and the unrecorded state was 10% or less.

Industrial Applicability

According to the optical information recording medium of the present invention and the method for manufacturing the same, by using materials having different complex indices of refraction for recording layers in multiple information layers, it becomes possible to adjust the difference in the transmittance of the information layer located on the laser beam incidence side between the recorded state and the unrecorded state, so that it becomes possible to perform recording/reproduction on/from multiple information layers correctly. Thus, an optical information recording medium with an even higher capacity can be provided. Moreover, write-once recording layers tend to be designed so as to have a very high transmittance, and thus it is often possible to laminate multiple information layers. Therefore, the optical information recording medium of the present invention is suitable to be used for optical information recording media including a write-once recording layer.

**Claims**

**1.** An optical information recording medium comprising a substrate (5), and at least m (m is an integer of 2 or more) information layers (1,2,3,4) provided on the substrate (15), wherein in the case where the m information layers are taken as the first through m-th information layers in the order from a laser beam incidence side of the recording medium, when a recording layer included in the j-th information layer (j is an integer satisfying $1 \leq j \leq m - 1$) is taken as the j-th recording layer, and when a transmittance of the j-th information layer at the time when the j-th recording layer is in a state A is TAj (%) and a transmittance of the j-th information layer at the time when the j-th recording layer is in a state B, which is optically different from the state A, is TBj (%), the following relationship is satisfied in the j-th information layer:

$$0 \leq |\, TAj - TBj\,| / (TAj,TBj)max \leq 0.10$$

where (TAj,TBj)max is a larger value of TAj and TBj;
**characterised in that**:

each of the m information layers (1,2,3,4) comprises a recording layer (102,202,302,402) that changes irreversibly between the state A and the state B, each of the recording layers containing Te-O-M (where M is a material containing at least one element selected from the group consisting of metal elements, semimetal elements and semiconductor elements);

at least one recording layer of the first through (m - 1)th recording layers included in the first through (m - 1)th information layers is formed of a material having a complex index of refraction (n - ik, where n is a refractive index and k is an extinction coefficient) that is different from that of the m-th recording layer included in the m-th information layer; and

a recording layer of the first through m-th recording layers provided nearer to the laser beam incidence side of the recording medium has a lower concentration of oxygen atoms.

2. The optical information recording medium according to claim 1, wherein when a difference in the refractive index between the case where the m-th recording layer is in the state A and the case where it is in the state B is $\Delta nm$, a difference in the extinction coefficient therebetween is $\Delta km$, a different in the refractive index between the case where the j-th recording layer is in the state A and the case where it is in the state B is $\Delta nj$, and a difference in the extinction coefficient therebetween is $\Delta kj$, the following relationship is satisfied in at least one information layer of the first through (m - 1)th information layers

$$|\Delta nm| + |\Delta km| > |\Delta nj| + |\Delta kj|.$$

3. The optical information recording medium according to claim 1, wherein further the following relationship is satisfied in the j-th information layer

$$(TAj + TBj) / 2 \geq 50.$$

4. The optical information recording medium according to claim 1, wherein the concentration of M atoms in the first recording layer (102) is higher than that in the second through m-th recording layers (202,302,402).

5. The optical information recording medium according to claim 1, wherein m is 4 or more.

6. The optical information recording medium according to claim 1, wherein the first through m-th recording layers (102,202,302,402) have a thickness of 80 nm or less.

7. The optical information recording medium according to claim 1, wherein an information layer including a recording layer that can change reversibly between a state A and a state B that are optically different from each other further is provided.

8. A method for manufacturing an optical information recording medium in which a plurality of information layers (1,2,3,4) are provided on a substrate (5) comprising:

at least m (m is an integer of 2 or more) steps of forming an information layer (1,2,3,4) including a recording layer (102,202,302,402), wherein in the case where the information layers formed in the m steps are taken as the first through m-th information layers in the order from a laser beam incidence side, when an information layer provided in the j-th position from the laser beam incidence side is taken as the j-th information layer (j is an integer satisfying $1 \leq j \leq m-1$) and a recording layer included in the j-th information layer is taken as the j-th recording layer, and when a transmittance of the j-th information layer at the time when the j-th recording layer is in a state A is TAj (%) and a transmittance of the j-th information layer at the time when the j-th recording layer is in a state B, which is optically different from the state A, is TBj (%), the following relationship is satisfied in the j-th information layer:

$$0 \leq |TAj - TBj| / (TAj, TBj)max \leq 0.10$$

where (TAj,TBj)max is a larger value of TAj and TBj;
**characterised in that**:

each recording layer (102,202,302,402) can change irreversibly between the state A and the state B, each of the recording layers containing Te-O-M (where M is a material containing at least one element selected from the group consisting of metal clements, semimetal elements and semiconductor elements); at least one recording layer of the first through (m - 1)th recording layers is formed of a material having a complex index of refraction (n - ik, where n is a refractive index and k is an extinction coefficient) that is different from that of the m-th recording layer included in the m-th information layer; and a recording layer included in an information layer formed by one of the at least m steps, and provided near to the laser beam incidence side of the recording medium, has a lower concentration of oxygen atoms.

9. The method for manufacturing the optical information recording medium, according to claim 8, wherein the at least in steps each comprise forming a information layer including a write-once recording layer containing Te-O-M produced by reactive sputtering using a target containing at least Te and M (M is a material containing at least one element selected from the group consisting of metal elements, semimetal elements, and semiconductor elements) and a film-forming gas containing at least oxygen gas.

**Patentansprüche**

1. Optisches Informationsaufzeichnungsmedium mit einem Substrat (5) und wenigstens m (m stellt eine Ganzzahl größer oder gleich 2 dar) Informationsschichten (1, 2, 3, 4), die auf dem Substrat (15) bereitgestellt sind, wobei, für den Fall, dass die m Informationsschichten als erste bis m-te Informationsschichten, in der Reihenfolge von einer Laserstrahl-Auftreffseite des Aufzeichnungsmediums ausgehend, betrachtet werden, wenn eine Schicht, die in der j-ten Informationsschicht (j stellt eine Ganzzahl dar, die die Beziehung $1 \leq j \leq m - 1$ erfüllt) enthalten ist, als die j-te Aufzeichnungsschicht betrachtet wird, und wenn eine Transmittanz der j-ten Informationsschicht zu der Zeit, zu der die j-te Aufzeichnungsschicht sich in einem Zustand A befindet, $TAj$ (%) beträgt und eine Transmittanz der j-ten Informationsschicht zu der Zeit, zu der sich die j-te Aufzeichnungsschicht in einem Zustand B befindet, welcher optisch unterschiedlich von dem Zustand A ist, $TBj$ (%) beträgt, die folgende Beziehung in der j-ten Informationsschicht erfüllt ist:

$$0 \leq |\ TAj\ -\ TBj\ |\ /\ (TAj,TBj)max\ \leq\ 0.10$$

wobei $(TAj,TBj)max$ den jeweils größeren Wert von $TAj$ und $TBj$ darstellt;
**dadurch gekennzeichnet, dass**

jede der m Informationsschichten (1, 2, 3, 4) eine Aufzeichnungsschicht (102, 202, 302, 402) aufweist, die irreversibel zwischen dem Zustand A und dem Zustand B wechselt, wobei jede der Aufzeichnungsschichten Te-O-M enthält (wobei M ein Material darstellt, das wenigstens ein Element aufweist, das aus der Gruppe ausgewählt ist, die aus Metallelementen, Halbmetallelementen und Halbleiterelementen besteht);
wenigstens eine Aufzeichnungsschicht der ersten bis (m-1)-ten Aufzeichnungsschichten, die in den ersten bis (m - 1)-ten Informationsschichten enthalten ist, aus einem Material gebildet ist, das einen komplexen Refraktionsindex aufweist (n - ik, wobei n einen refraktiven Index darstellt und k einen Extinktionskoeffizienten darstellt), der unterschiedlich von jenem der m-ten Aufzeichnungsschicht ist, die in der m-ten Informationsschicht enthalten ist; und
eine Aufzeichnungsschicht der ersten bis m-ten Aufzeichnungsschichten, die näher zu der Laserstrahl-Auftreffseite des Aufzeichnungsmediums bereitgestellt ist, eine geringere Konzentration von Sauerstoffatomen aufweist.

2. Optisches Informationsaufzeichnungsmedium nach Anspruch 1, bei dem, wenn ein Unterschied in dem refraktiven Index zwischen dem Fall, in dem die m-te Aufzeichnungsschicht sich in dem Zustand A befindet, und dem Fall, in dem sie sich in dem Zustand B befindet, $\Delta nm$ beträgt, ein Unterschied in den Extinktionskoeffizienten hierzwischen $\Delta km$ beträgt, ein unterschiedlicher bzw. Unterschied in dem refraktiven Index zwischen dem Fall, in dem sich die j-te Aufzeichnungsschicht in dem Zustand A befindet, und dem Fall, in dem sie sich in dem Zustand B befindet, $\Delta nj$ beträgt, und ein Unterschied in dem Extinktionskoeffizienten hierzwischen $\Delta kj$ beträgt, die nachfolgende Beziehung für wenigstens eine Informationsschicht der ersten bis (m - 1)-ten Informationsschichten erfüllt ist:

$$|\Delta nm| + |\Delta km| > |\Delta nj| + |\Delta kj|.$$

3. Optisches Informationsaufzeichnungsmedium nach Anspruch 1, bei dem ferner die folgende Beziehung in der j-ten Informationsschicht erfüllt ist

$$(TAj + TBj) / 2 \geq 50.$$

4. Optisches Informationsaufzeichnungsmedium nach Anspruch 1, bei dem die Konzentration von M Atomen in der ersten Aufzeichnungsschicht (102) höher ist als jene in den zweiten bis m-ten Aufzeichnungsschichten (202, 302, 402).

5. Optisches Informationsaufzeichnungsmedium nach Anspruch 1, bei dem m größer oder gleich 4 ist.

6. Optisches Informationsaufzeichnungsmedium nach Anspruch 1, bei dem die ersten bis m-ten Aufzeichnungsschichten (102, 202, 302, 402) eine Dicke von 80 nm oder weniger aufweisen.

7. Optisches Informationsaufzeichnungsmedium nach Anspruch 1, bei dem eine Informationsschicht, die eine Aufzeichnungsschicht enthält, die reversibel zwischen einem Zustand A und einem Zustand B wechseln kann, welche voneinander unterschiedlich sind, ferner bereitgestellt ist.

8. Verfahren zur Herstellung eines optischen Informationsaufzeichnungsmediums, bei welchem eine Anzahl von Informationsschichten (1, 2, 3, 4) auf einem Substrat (5) bereitgestellt sind, das beinhaltet:

wenigstens m (m stellt eine Ganzzahl größer oder gleich 2 dar) Schritte zum Ausbilden einer Informationsschicht (1, 2, 3, 4) mit einer Aufzeichnungsschicht (102, 202, 302, 402) wobei, für den Fall, dass die Informationsschichten, die in den m Schritten ausgebildet werden, als erste bis m-te Informationsschichten, in der Reihenfolge von einer Laserstrahl-Auftreffseite des Aufzeichnungsmediums ausgehend, betrachtet werden, wenn eine Informationsschicht, die in der j-ten Position von der Laserstrahl-Auftreffseite bereitgestellt ist, als die j-te Informationsschicht betrachtet wird (j stellt eine Ganzzahl dar, die die Beziehung $1 \leq j \leq m - 1$ erfüllt), und eine Aufzeichnungsschicht, die in der j-ten Informationsschicht enthalten ist, als die j-te Aufzeichnungsschicht betrachtet wird, und wenn eine Transmittanz der j-ten Informationsschicht zu der Zeit, zu der die j-te Aufzeichnungsschicht sich in einem Zustand A befindet, TAj (%) beträgt und eine Transmittanz der j-ten Informationsschicht zu der Zeit, zu der sich die j-te Aufzeichnungsschicht in einem Zustand B befindet, welcher optisch unterschiedlich von dem Zustand A ist, TBj (%) beträgt, die folgende Beziehung in der j-ten Informationsschicht erfüllt ist:

$$0 \leq | TAj - TBj | / (TAj, TBj)max \leq 0.10$$

wobei (TAj, TBj)max den jeweils größeren Wert von TAj und TBj darstellt;
**dadurch gekennzeichnet, dass**

jede Aufzeichnungsschicht (102, 202, 302, 402) irreversibel zwischen dem Zustand A und dem Zustand B wechseln kann, wobei jede der Aufzeichnungsschichten Te-O-M enthält (wobei M ein Material darstellt, das wenigstens ein Element aufweist, das aus der Gruppe ausgewählt ist, die aus Metallelementen, Halbmetallelementen und Halbleiterelementen besteht);
wenigstens eine Aufzeichnungsschicht der ersten bis (m - 1)-ten Aufzeichnungsschichten aus einem Material gebildet ist, das einen komplexen Refraktionsindex aufweist (n - ik, wobei n einen refraktiven Index darstellt und k einen Extinktionskoeffizienten darstellt), der unterschiedlich von jenem der m-ten Aufzeichnungsschicht ist, die in der m-ten Informationsschicht enthalten ist; und
eine Aufzeichnungsschicht, die in einer Informationsschicht enthalten ist, die durch einen der wenigstens

18

n Schritte gebildet wurde, und die näher zu der Laserstrahl-Auftreffseite des Aufzeichnungsmediums bereitgestellt ist, eine geringere Konzentration von Sauerstoffatomen aufweist.

**9.** Verfahren zur Herstellung des optischen Informationsaufzeichnungsmediums nach Anspruch 8, wobei die wenigstens m Schritte jeweils das Ausbilden einer Informationsschicht beinhalten, die eine einmal beschreibbare, Te-O-M enthaltende Aufzeichnungsschicht beinhaltet, die durch reaktives Sputtern unter Verwendung eines Targets bzw. Ziels gebildet wird, das wenigstens Te und M (M stellt ein Material dar, das wenigstens ein Element aufweist, das aus der Gruppe ausgewählt ist, die aus Metallelementen, Altmetallelementen und Halbleiterelementen besteht) und ein filmbildendes Gas, das wenigstens Sauerstoffgas enthält, aufweist.

## Revendications

**1.** Support d'enregistrement d'informations optique comprenant un substrat (5), et au moins m (m est un entier de 2 ou plus) couches d'informations (1, 2, 3, 4) prévues sur le substrat (15), où dans le cas où les m couches d'informations sont considérées comme la première à la m-ième couche d'informations dans l'ordre d'un côté d'incidence du faisceau laser du support d'enregistrement, lorsqu'une couche d'enregistrement comprise dans la j-ième couche d'informations (j est un entier satisfaisant $1 \leq j \leq m\text{-}1$) est considérée comme la j-ième couche d'enregistrement, et lorsqu'une transmittance de la j-ième couche d'informations au moment où la j-ième couche d'enregistrement est dans un état A est TAj (%) et une transmittance de la j-ième couche d'informations au moment où la j-ième couche d'enregistrement est dans un état B, qui est optiquement différent de l'état A, est TBj (%), la relation suivante est satisfaite dans la j-ième couche d'informations:

$$0 \leq TAj - TBj \mid / (TAj, TBj) \max \leq 0,10$$

où (TAj, TBj) max est une valeur plus grande de TAj et TBj,
**caractérisé en ce que**
chacune des m couches d'informations (1, 2, 3, 4) comprend une couche d'enregistrement (102, 202, 302, 402) qui change de manière irréversible entre l'état A et l'état B, chacune des couches d'enregistrement contenant Te-O-M (où M est un matériau contenant au moins un élément sélectionné parmi le groupe constitué d'éléments métalliques, d'éléments semi-métalliques et d'éléments semi-conducteurs);
au moins une couche d'enregistrement de la première à la (m-1) ième couches d'enregistrement comprise dans la première à la (m-1) ième couches d'informations est formée d'un matériau ayant un indice de réfraction complexe (n-ik, où n est un indice de réfraction et k est un coefficient d'extinction) qui est différent de celui de la m-ième couche d'enregistrement comprise dans la m-ième couche d'informations; et
une couche d'enregistrement de la première à la m-ième couches d'enregistrement prévue plus proche du côté d'incidence du faisceau laser du support d'enregistrement a une concentration plus faible d'atomes d'oxygène.

**2.** Support d'enregistrement d'informations optique selon la revendication 1, dans lequel lorsqu'une différence dans l'indice de réfraction entre le cas où la m-ième couche d'enregistrement est dans l'état A et le cas où celle-ci est dans l'état B est $\Delta nm$, une différence dans le coefficient d'extinction entre les deux est $\Delta km$, une différence dans l'indice de réfraction entre le cas où la j-ième couche d'enregistrement est dans l'état A et le cas où celle-ci est dans l'état B est $\Delta nj$, et une différence dans le coefficient d'extinction entre les deux est $\Delta kj$, la relation suivante est satisfaite dans au moins une couche d'informations de la première à la (m-1)ième couches d'informations

$$\left|\Delta nm\right| + \left|\Delta km\right| > \left|\Delta nj\right| + \left|\Delta kj\right|.$$

**3.** Support d'enregistrement d'informations optique selon la revendication 1, dans lequel en outre la relation suivante est satisfaite dans la j-ième couche d'informations

$$(TAj + TBj) /2 \geq 50.$$

**4.** Support d'enregistrement d'informations optique selon la revendication 1, dans lequel la concentration d'atomes de M dans la première couche d'enregistrement (102) est supérieure à celle dans la deuxième à la m-ième couches d'enregistrement (202, 302, 402).

5. Support d'enregistrement d'informations optique selon la revendication 1, dans lequel m est 4 ou plus.

6. Support d'enregistrement d'informations optique selon la revendication 1, dans lequel la première à la m-ième couches d'enregistrement (102, 202, 302, 402) ont une épaisseur de 80nm ou moins.

7. Support d'enregistrement d'informations optique selon la revendication 1, dans lequel on prévoit en outre une couche d'informations comportant une couche d'enregistrement qui peut changer de manière réversible entre un état A et un état B qui sont optiquement différents entre eux.

8. Procédé pour fabriquer un support d'enregistrement d'informations optique dans lequel une pluralité de couches d'informations (1, 2, 3, 4) sont prévues sur un substrat (5) comprenant:

au moins m (m est un entier de 2 ou plus) étapes de formation d'une couche d'informations (1, 2, 3, 4) comportant une couche d'enregistrement (102, 202, 302, 402), où dans le cas où les couches d'informations formées dans les m étapes sont considérées comme la première à la m-ième couches d'informations dans l'ordre d'un côté d'incidence du faisceau laser, lorsqu'une couche d'informations prévue dans la j-ième position à partir du côté d'incidence du faisceau laser est considérée comme la j-ième couche d'informations (j est un entier satisfaisant $1 \leq j \leq m-1$) et une couche d'enregistrement comprise dans la j-ième couche d'informations est considérée comme la j-ième couche d'enregistrement, et lorsqu'une transmittance de la j-ième couche d'informations au moment où la j-ième couche d'enregistrement est dans un état A est $TA_j$ (%) et une transmittance de la j-ième couche d'informations au moment où la j-ième couche d'enregistrement est dans un état B, qui est optiquement différent de l'état A, est $TB_j$ (%), la relation suivante est satisfaite dans la j-ième couche d'informations:

$$0 \leq |TA_j - TB_j| / (TA_j, TB_j) \max \leq 0,10$$

où $(TA_j, TB_j)$ max est une valeur plus grande de $TA_j$ et de $TB_j$;
**caractérisé en ce que**:

chaque couche d'enregistrement (102, 202, 302, 402) peut changer de manière irréversible entre l'état A et l'état B, chacune des couches d'enregistrement contenant Te-O-M (où M est un matériau contenant au moins un élément sélectionné parmi le groupe constitué d'éléments métalliques, d'éléments semi-métalliques et d'éléments semi-conducteurs),
au moins une couche d'enregistrement de la première à la (m-1) ième couches d'enregistrement est formée d'un matériau ayant un indice de réfraction complexe (n - ik, où n est un indice de réfraction et k est un coefficient d'extinction) qui est différent de celui de la m ième couche d'enregistrement comprise dans la m ième couche d'informations, et
une couche d'enregistrement comprise dans une couche d'informations formée par l'une des au moins m étapes, et pourvue proche du côté d'incidence du faisceau laser du support d'enregistrement, a une concentration plus faible d'atomes d'oxygène.

9. Procédé pour fabriquer le support d'enregistrement d'informations optique, selon la revendication 8;
dans lequel les au moins m étapes comprennent chacune le fait de former une couche d'informations comportant une couche d'enregistrement non réinscriptible contenant Te-O-M que l'on produit par une pulvérisation réactive en utilisant une cible contenant au moins Te et M (M est un matériau contenant au moins un élément sélectionné parmi le groupe constitué d'éléments métalliques, d'éléments semi-métalliques, et d'éléments semi-conducteurs) et un gaz formant un film contenant au moins un gaz d'oxygène.

FIG. 1

FIG. 2

FIG. 3

Signal level

Unrecorded first information layer

Recorded first information layer

V$_H$ →

V$_L$ →

Time

Reproducing signals recorded in
one circumference of a track .

FIG. 4

**EP 1 542 217 B1**

**Patent documents cited in the description**

- EP 9809823 A
- EP 1180767 A
- EP 1172811 A